# EUROPÄISCHE PATENTANMELDUNG

(11) **EP 4 566 791 A1**
(43) Veröffentlichungstag der Anmeldung: **11.06.2025**
(21) Anmeldenummer: 24211951.9
(22) Anmeldetag: 11.11.2024
(51) Int. Cl.: B29C 45/14, B32B 5/18, B32B 5/24, B32B 27/12, B60R 13/02

(54) **MEHRSCHICHTIGE VERBUNDSTRUKTUR MIT THERMISCHER ISOLATION**

(30) Priorität: 04.12.2023 DE 102023212197
(71) Anmelder: Benecke-Kaliko AG, 30419 Hannover (DE)
(72) Erfinder: Nassauer, Benjamin, 30419 Hannover (DE); Kneer, Janosch, 30419 Hannover (DE); Schleuniger, Juerg, 30419 Hannover (DE); Kegel, Isabell, 30419 Hannover (DE); Benz, Nicolai, 30419 Hannover (DE); Rösch, Simon, 30419 Hannover (DE); Jörger, Christian, 79336 Herbolzheim (DE)
(74) Vertreter: Preusser, Andrea

(57) **Zusammenfassung**

Die Erfindung betrifft eine mehrschichtige Verbundstruktur (2), aufweisend eine einlagige oder mehrlagige Oberschicht (6), vorzugsweise aus polymerem Material und eine Funktionsschicht (4) mit einem Substrat und einer darauf angeordneten elektrisch leitfähigen Schicht, vorzugsweise als eine gedruckte elektrisch leitfähige Struktur, wobei die Oberschicht (6) die sichtbare Seite der mehrschichtigen Verbundstruktur (2) bildet. Die mehrschichtige Verbundstruktur (2) weist zur thermischen Isolation der Funktionsschicht (4) eine Sperrschicht (8) aus einem textilen Flächengebilde auf.

## Beschreibung

Die Erfindung betrifft eine mehrschichtige Verbundstruktur, aufweisend eine einlagige oder mehrlagige Oberschicht, vorzugsweise aus polymerem Material und eine Funktionsschicht mit einem Substrat und einer darauf angeordneten elektrisch leitfähigen Schicht. Vorzugsweise ist die elektrisch leitfähige Schicht als eine gedruckte elektrisch leitfähige Struktur ausgebildet. Die Oberschicht bildet die sichtbare Seite der mehrschichtigen Verbundstruktur.

Außerdem betrifft die Erfindung ein Verkleidungsteil sowie ein Fahrzeug mit einem erfindungsgemäßen Verkleidungsteil.

Die Erfindung betrifft darüber hinaus ein Verfahren zur Herstellung eines erfindungsgemäßen Verkleidungsteils.

Im Automobilbau werden weiche Innenraumoberflächen durch mehrschichtige Aufbauten erzielt. Diese Aufbauten umfassen häufig eine Schaumschicht und eine Oberschicht. Auf diese Weise können Bauteile wie Türverkleidungen, Instrumententafeln oder Armauflagen dargestellt werden. Um solche Oberflächen zu beheizen, kommen häufig Heizdrähte zum Einsatz. Um optische und haptische Abzeichnungen der Drähte an der Oberfläche auszuschließen, befinden sich diese Drähte üblicher Weise unter einer Schaumschicht. Aufgrund der Tatsache, dass zwischen derartigen Heizdrähten und der Oberschicht des mehrschichtigen Verbundmaterials eine Distanz von üblicherweise mehr als 10 mm besteht, wird die gewünschte Erwärmung nur zeitverzögert erreicht.

Ein weiterer Nachteil besteht darin, dass die Drähte üblicherweise mit verhältnismäßig großem Abstand verlegt werden, wodurch warme und kalte Regionen an der Oberfläche des mehrschichtigen Verbundmaterials entstehen können, was außerordentlich unerwünscht ist.

Daher wird angestrebt, möglichst dünne und großflächig beheizbare Lagen innerhalb des mehrschichtigen Verbundmaterials nahe an der Oberfläche anzuordnen.

Aus der EP 1 924 125 B1 ist es bekannt, eine Polymerschicht auf Basis von Polyurethan oder PVC durch Zugabe von leitfähigen Additiven, zum Beispiel Nanotubes, Silber, ionischen Flüssigkeiten, Graphitpartikeln und/oder Kupferpartikeln in das pastenförmige Kunststoffmaterial vor Ausbildung der Schicht elektrisch leitfähig auszurüsten, um diese nach Ausbildung der Schicht mittels Stromdurchfluss unmittelbar elektrisch zu beheizen.

Die DE 10 2020 215 949 A1 offenbart ein Verfahren zur Herstellung einer elektrisch heizbaren Schicht aus einem pastenförmigen Kunststoffmaterial. Das pastenförmige Kunststoffmaterial kann in einem Druckverfahren auf das Trägermaterial appliziert werden, wodurch zum Beispiel Strukturen in Form von Leiterbahnen zur Stromzufuhr der elektrisch heizbaren Schicht gebildet werden können.

Um die haptischen Eigenschaften der Mehrschichtverbundstruktur möglichst wenig zu beeinflussen, wird angestrebt, das üblicher Weise als eine Folie ausgebildete Trägermaterial bzw. Substrat der elektrisch leitfähigen Schicht möglichst dünn auszulegen. Die beheizbare mehrschichtige Verbundstruktur durchläuft ein eigenes Herstellungsverfahren und wird in einem nachgelagerten Herstellungsprozess mit einem Träger zu einem Verkleidungsteil, z.B. einer Türverkleidung, einer Instrumententafel oder einer Armauflage komplettiert. Das mit einer maximalen Schichtdicke von häufig nur 0,1 mm sehr dünn ausgebildete Substrat der elektrisch leitfähigen Schicht weist eine Temperaturbeständigkeit von maximal 130 °C auf. Da die Prozesstemperaturen im Spritzgussverfahren bedingt durch ein erforderliches Aufschmelzen des Polymers üblicher Weise im Bereich von 200 °C bis 260 °C liegen, ist ein direktes Hinterspritzen des Substrats mit einer Kunststoffschmelze und einer darauffolgenden Formgebung und Erstarrung zu dem Verkleidungsteil nicht möglich. Daher muss die Herstellung des Trägers ebenfalls separat erfolgen. Die mehrschichtige Verbundstruktur wird in einem weiteren Verfahrensschritt auf den Träger kaschiert. Hierfür ist zuerst das Auftragen einer Haftvermittlerschicht erforderlich, gefolgt von der Kaschierung der Verbundstruktur auf den Träger. Die große Anzahl der Verfahrensschritte und die daraus resultierende Fertigungszeit lässt die Herstellung des Verkleidungsteils mit einer heizbaren mehrschichtigen Verbundstruktur sehr aufwendig und teuer werden.

Die Aufgabe der Erfindung liegt darin, eine mehrschichtige Verbundstruktur und ein Verkleidungsteil mit einer elektrisch leitfähigen Schicht bereitzustellen, wobei die elektrisch leitfähige Schicht den Temperaturen im Spritzgussprozess standhält. Der Erfindung liegt außerdem die Aufgabe zugrunde, ein Verfahren zur Herstellung eines Verkleidungsteils mit einer eine elektrisch leitfähige Schicht aufweisenden mehrschichtigen Verbundstruktur bereitzustellen, welches im Vergleich zu den bekannten Lösungen weniger Verfahrensschritte benötigt und zusätzlich oder alternativ eine kostengünstigere Herstellung ermöglicht.

Die Lösung dieser Aufgabe ergibt sich durch eine mehrschichtige Verbundstruktur mit den Merkmalen des unabhängigen Anspruchs 1. Eine weitere Lösung der Aufgabe ergibt sich durch ein Verkleidungsteil sowie ein Verfahren zur Herstellung eines erfindungsgemäßen Verkleidungsteils.

Weitere vorteilhafte Ausbildungen sind in den abhängigen Ansprüchen offenbart. Weitere Vorteile und Merkmale sind der allgemeinen Beschreibung sowie den Ausführungsbeispielen zu entnehmen.

Die vorliegende Anmeldung betrifft eine mehrschichtige Verbundstruktur, aufweisend eine einlagige oder mehrlagige Oberschicht, vorzugsweise aus polymerem Material und eine Funktionsschicht mit einem Substrat und einer darauf angeordneten elektrisch leitfähigen Schicht auf. Vorzugsweise ist die elektrisch leitfähige Schicht als eine gedruckte elektrisch leitfähige Struktur ausgebildet. Die Oberschicht bildet die sichtbare Seite der Verbundstruktur. Die mehrschichtige Verbundstruktur weist zur thermischen Isolation der Funktionsschicht eine Sperrschicht aus einem textilen Flächengebilde auf.

Die elektrisch leitfähige Struktur kann direkt auf das Substrat aus einem polymeren Material, beispielsweise einem thermoplastischem Polyolefin (TPO), vorzugsweise einem thermoplastischen Polyurethan (TPU) gedruckt werden. Hierzu kann ein pastöses Material mit elektrisch leitfähigen Additiven, zum Beispiel aus Kohlenstoff oder Silber, versetzt werden. So können elektrisch leitfähige Strukturen, z. B. in Form von Leiterbahnen, die besonders dünn, dehnfähig und biegeflexibel sind, in einem Druckverfahren erzeugt werden. Durch Trocknung z.B. in einem Ofen erstarrt das pastöse Material und härtet aus, wodurch eine formstabile Lage oder Struktur erhalten bleibt. Auf diese Weise kann durch flächiges Bedrucken auch die elektrisch leitfähige Schicht erzeugt werden. Es zeigt sich als vorteilhaft, dass die elektrisch leitfähige Schicht auf diese Weise besonders dünn und flexibel ausgebildet sein kann. Die Pasten können durch geeignete Druckverfahren, wie z.B. Siebdruck, auf das Substrat aufgebracht werden. Die Schichtstärke der getrockneten Paste sollte vorzugsweise im Bereich 5-30 µm liegen. Durch eine möglichst geringe Schichtdicke der Funktionsschicht in einem Bereich von vorzugsweise 50 µm bis 200 µm kann sichergestellt werden, dass der optische und bzw. oder haptische Eindruck der sichtbaren Vorderseite der Verbundstruktur nicht negativ beeinflusst wird. Als besonders vorteilhaft hat sich eine Schichtdicke der Funktionsschicht von 100 µm erwiesen.

Die Oberschicht bildet die sichtbare Vorderseite der Verbundstruktur. Mit anderen Worten ist die Oberschicht von außen sichtbar, sodass die Oberschicht das optische Erscheinungsbild der Verbundstruktur bestimmt. Vorzugsweise ist die Oberschicht aus einem polymeren Material, beispielsweise einem thermoplastischem Polyolefin oder aus einem Polyurethan ausgebildet. Die Oberschicht kann jedoch auch ein textiles Flächengebilde oder ein Echtleder aufweisen bzw. daraus ausgebildet sein. Die Oberschicht kann eine sichtbare Vorderseite mit einer ggfs. reliefartigen Oberflächenstruktur in Form einer Narbung aufweisen, wie es typischer Weise bei einer Oberflächenfolie bzw. einem Kunstleder der Fall ist. Hierdurch können der Oberfläche der Verbundstruktur angenehme optische und haptische Eigenschaften verliehen werden, deren Effekt sich durch eine Strukturierung, z. B. in Form einer Prägung der die Oberfläche Verbundstruktur bildenden außenliegenden Seite der Oberschicht verstärken lässt.

Die elektrische leitfähige Schicht kann zur Stromversorgung an eine Spannungsquelle und bzw. oder zum Abgreifen von Sensorsignalen an eine Auswerteelektronik angeschlossen werden. Es zeigt sich als besonders vorteilhaft, dass durch Drucken der elektrisch leitfähigen Struktur die hierfür erforderlichen Leiterbahnen bereits innerhalb der mehrschichtigen Verbundstruktur vorgesehen sein können. Hierdurch kann der Aufwand einer externen Verkabelung der elektrisch leitfähigen Schicht verringert bzw. komplett vermieden werden. Die Leiterbahnen sind stellenweise frei zugänglich, wodurch die Kontaktstellen mit externen Einrichtungen z. B. mit Steck- oder Crimpverbindungen elektrisch leitend verbunden werden können. Die Kontaktierungsposition kann durch entsprechendes Layout der gedruckten Leiterbahnen frei gewählt werden. Neben der ersten elektrisch leitfähigen Schicht kann die mehrschichtige Verbundstruktur weitere elektrisch leitfähige Schichten aufweisen.

Die Sperrschicht ist aus einem textilen Flächengebilde ausgebildet. Als textiles Flächengebilde können beispielsweise Gewebe, Gewirke oder Vliesstoffe verwendet werden. Die Sperrschicht ist unterhalb der Funktionsschicht, vorzugsweise direkt an die Funktionsschicht angrenzend angeordnet. Die Sperrschicht dient zur thermischen Isolierung der gegenüber den hohen Prozesstemperaturen von 200 °C bis 260 °C empfindlichen Funktionsschicht. Auf vorteilhafte Weise kann die erfindungsgemäße mehrschichtige Verbundstruktur so in einem Spritzgussverfahren mit einem aufgeschmolzenen und entsprechend erhitztem polymeren Material hinterspritzt und zu einem Verkleidungsteil für einen Fahrzeuginnenraum weiterverarbeitet werden. Die Sperrschicht verhindert mit anderen Worten einen direkten Kontakt der Funktionsschicht bzw. des Substrats mit der Kunststoffschmelze und bildet so eine thermische Isolation zwischen der Funktionsschicht und der Kunststoffschmelze, sodass eine Beschädigung der Funktionsschicht vermieden werden kann.

Die erfindungsgemäße mehrschichtige Verbundstruktur ermöglicht aufgrund der thermischen Isolation der elektrisch leitfähigen Funktionsschicht die Weiterverarbeitung in einem Spritzgussverfahren. So können aufwändige Verfahrensschritte eingespart und es kann eine in großen Stückzahlen besonders wirtschaftliche Herstellung von z. B. beheizbaren Verkleidungsteilen für Fahrzeuginnenräume ermöglicht werden.

Gemäß einem weiteren Aspekt der vorliegenden Erfindung ist zwischen der Sperrschicht und der Funktionsschicht eine geschäumte Schicht angeordnet. Die geschäumte Schicht wird durch einen Polymerschaum gebildet. Dieser Polymerschaum kann aus Polyvinylchlorid-, Polyolefin- oder Polyurethanschaum ausgebildet sein. Der Polymerschaum kann zur Herstellung eines Haftverbunds mit der Funktionsschicht und bzw. oder der Sperrschicht gegebenenfalls eine Haftvermittlungsschicht aufweisen. Der Polymerschaum kann zum Beispiel auf die Funktionsschicht und bzw. oder die Sperrschicht aufkaschiert werden.

Der Effekt der thermischen Isolation der Funktionsschicht kann durch die geschäumte Schicht nochmals verbessert werden. So können die Prozesstemperaturen im Spritzgussverfahren nochmals erhöht werden. Darüber hinaus kann die geschäumte Schicht den haptischen Eindruck der mehrschichtigen Verbundstruktur positiv beeinflussen. Die Sperrschicht kann zusätzlich als Barriere der Polymerschmelze dienen, um zu verhindern, dass die Polymerschmelze in die geschäumte Schicht eindringt.

Gemäß einem weiteren Aspekt der vorliegenden Erfindung ist die elektrisch leitfähige Schicht elektrisch heizbar. Die elektrisch heizbare Lage kann sich bei Stromführung aufgrund des elektrischen Widerstands der elektrisch leitfähigen Struktur erwärmen und so die Verbundstruktur als ein flächiges Widerstandsheizelement erwärmen. Auf vorteilhafte Weise kann die elektrisch heizbare Schicht durch die geringe Schichtstärke unmittelbar an der Rückseite der Oberschicht angrenzend angeordnet sein, wodurch eine schnellere und bzw. oder energieeffizientere und bzw. oder gleichmäßigere Erwärmung der Oberschicht gegenüber konventionellen Lösungen mit Heizdrähten ermöglicht wird. Hier wirkt sich auch die flächige Ausgestaltung der Heizschicht im Vergleich zu einem Draht positiv aus.

Gemäß einem weiteren Aspekt der vorliegenden Erfindung weist die elektrisch leitfähige Schicht einen Sensor auf oder bildet wenigstens einen Teil eines Sensors. Ein Anordnen von Sensoren kann so unmittelbar unterhalb bzw. direkt an die Oberschicht angrenzend erfolgen, ohne dass der optische und haptische Eindruck der Verbundstruktur durch starre und lokal angeordnete Elektronikkomponenten negativ beeinflusst wird.

Die Messgenauigkeit und bzw. oder die Messwertauflösung kann durch ein oberflächennahes Anordnen des Sensors unmittelbar auf der Rückseite der Oberschicht verbessert werden. Durch die gleichzeitige Kombination der elektrisch leitfähigen Schicht als Sensor- und Heizelement kann die Anzahl der Komponenten, welche ausschließlich die Funktion des Sensors oder eines Heizelements erfüllen würden, reduziert werden. Durch die Integration mehrerer Funktionen in die elektrisch leitfähige Schicht kann ein besonders kompakter und bzw. oder kostengünstiger Aufbau der mehrschichtigen Verbundstruktur erfolgen.

Gemäß einem weiteren Aspekt der vorliegenden Erfindung ist der Sensor ein Temperatursensor. Der Temperatursensor kann als klassisches oberflächenmontiertes Sensorelement, auch SMD-Bauteil genannt, auf der elektrisch leitfähigen Struktur angeordnet sein. SMD-Bauteile können typischer Weise über eine Löt- oder Klebeverbindung auf einem Substrat, z. B. einer Leiterplatte, angeordnet werden.

Alternativ kann der Temperatursensor als eine gedruckte und aushärtend getrocknete elektrisch leitfähige Struktur ausgebildet sein bzw. durch die elektrisch leitfähige Struktur gebildet werden.

Der Temperatursensor kann mit einer Einrichtung zur Regelung der Temperatur der elektrisch heizbaren Lage verbunden sein. Auf besonders vorteilhafte Weise kann durch den Temperatursensor und eine entsprechende Temperaturregelung ein Überhitzen der mehrschichtigen Verbundstruktur vermieden werden. Die Einrichtung zur Regelung der Temperatur kann innerhalb oder außerhalb der mehrschichtigen Verbundstruktur angeordnet sein.

Die vorliegende Erfindung betrifft außerdem ein Verkleidungsteil, vorzugsweise ein Verkleidungsteil eines Fahrzeuginnenraums, mit einem Träger aus polymerem Material und einer darauf angeordneten erfindungsgemäßen mehrschichtigen Verbundstruktur. Die zuvor genannten Eigenschaften und Vorteile lassen sich so auf ein beheizbares Verkleidungsteil, z.B. eine Türverkleidung, eine Instrumententafel oder eine Armauflage übertragen. Insbesondere können die Herstellkosten des erfindungsgemäßen Verkleidungsteils in großen Stückzahlen gegenüber den bekannten Lösungen reduziert werden.

Die vorliegende Erfindung betrifft außerdem ein Fahrzeug mit einem erfindungsgemäßen Verkleidungsteil. Durch die reduzierten Kosten in der Herstellung können beheizbare Verkleidungsteile auch bei Fahrzeugen im niedrigeren Preissegment angeboten werden.

Die vorliegende Erfindung betrifft außerdem ein Verfahren zur Herstellung eines erfindungsgemäßen Verkleidungsteils. Das Verfahren ist gekennzeichnet durch die folgenden Verfahrensschritte:
a) Herstellung der mehrschichtigen Verbundstruktur,
b) Einlegen der mehrschichtigen Verbundstruktur in ein mindestens zweiteiliges Spritzgusswerkzeug,
c) Einspritzen einer Polymerschmelze in das Spritzgusswerkzeug auf der der Sperrschicht zugewandten Seite,
d) Abkühlen und Erstarren der Polymerschmelze in dem Spritzgusswerkzeug und Entnehmen des Verkleidungsteils.

Die Herstellung der mehrschichtigen Verbundstruktur gemäß Verfahrensschritt a) umfasst das Herstellen der Funktionsschicht durch Aufbringen mindestens einer elektrisch leitfähigen Schicht auf das Substrat, vorzugsweise als eine gedruckte elektrisch leitfähige Struktur. Auf eine erste Seite der Funktionsschicht wird die einlagige oder mehrlagige Oberschicht kaschiert. Auf eine zweite, der Oberschicht abgewandten Seite der Funktionsschicht wird die Sperrschicht oder die geschäumte Schicht kaschiert. Bei Vorhandensein der optionalen geschäumten Schicht wird die Sperrschicht auf die der Funktionsschicht abgewandten Seite der geschäumten Schicht kaschiert.

Die so hergestellte mehrschichtige Verbundstruktur wird in ein mindestens zweiteiliges Spritzgusswerkzeug eingelegt. Nach Verschließen des Spritzgusswerkzeugs erfolgt gemäß Verfahrensschritt c) das Einspritzen einer Polymerschmelze in das Spritzgusswerkzeug auf der der Sperrschicht zugewandten Seite.

Durch Abkühlen und Erstarren der Polymerschmelze wird gemäß Verfahrensschritt d) der Träger gebildet. Der Verbund aus Träger und der mehrschichtigen Verbundstruktur bildet das erfindungsgemäße Verkleidungsteil, welches nach Öffnen des Spritzgusswerkzeugs aus diesem entnommen werden kann.

Die Sperrschicht dient zur thermischen Isolierung der gegenüber hohen Prozesstemperaturen von 200 °C bis 260 °C empfindlichen Funktionsschicht. Auf vorteilhafte Weise kann die mehrschichtige Verbundstruktur so in einem erfindungsgemäßen Verfahren mit einem aufgeschmolzenen und entsprechend erhitztem polymeren Material hinterspritzt und zu einem Verkleidungsteil für einen Fahrzeuginnenraum weiterverarbeitet werden. Die Sperrschicht verhindert mit anderen Worten einen direkten Kontakt der Funktionsschicht bzw. des Substrats mit der Kunststoffschmelze und bildet so eine thermische Isolation zwischen der Funktionsschicht und der Kunststoffschmelze, sodass eine Beschädigung der Funktionsschicht vermieden werden kann. Der Effekt der thermischen Isolation der Funktionsschicht kann durch die geschäumte Schicht nochmals verbessert werden. So können die Prozesstemperaturen im Spritzgussverfahren nochmals erhöht werden.

Die erfindungsgemäße mehrschichtige Verbundstruktur ermöglicht aufgrund der thermischen Isolation der elektrisch leitfähigen Funktionsschicht die Weiterverarbeitung in einem Spritzgussverfahren. So können aufwändige Verfahrensschritte eingespart und es kann eine in großen Stückzahlen besonders wirtschaftliche Herstellung von z. B. beheizbaren Verkleidungsteilen für Fahrzeuginnenräume ermöglicht werden.

Anhand der Figur wird im Folgenden ein Ausführungsbeispiel der Erfindung schematisch dargestellt und näher erläutert.

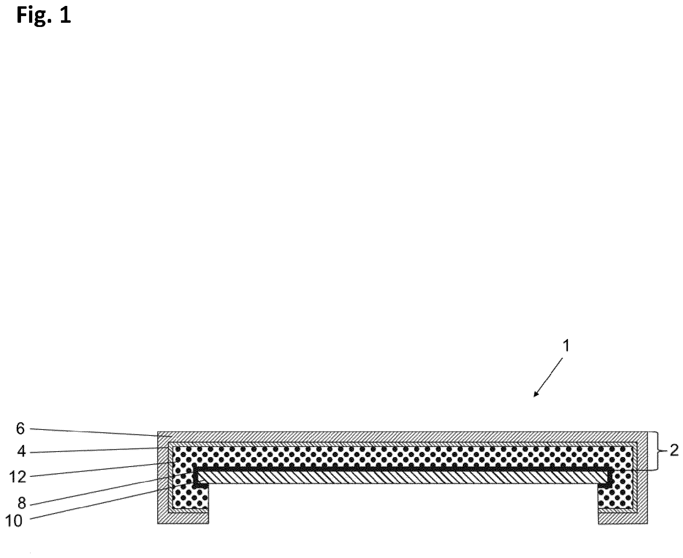

Darin zeigt Fig. 1 eine schematische Darstellung eines erfindungsgemäßen Verkleidungsteils gemäß eines ersten Ausführungsbeispiels in einer Schnittdarstellung.

Die Fig. 1 zeigt ein Verkleidungsteil 1 mit einem Träger 10 aus polymerem Material und einer darauf angeordneten mehrschichtigen Verbundstruktur 2. Die mehrschichtige Verbundstruktur 2 weist eine einlagige oder mehrlagige Oberschicht 6 aus polymerem Material auf, wobei die Oberschicht 6 die sichtbare Seite des Verkleidungsteils 1 bildet. Die Oberschicht 6 weist eine sichtbare Vorderseite mit einer ggfs. reliefartigen Oberflächenstruktur in Form einer Narbung auf, wie es typischer Weise bei einer Oberflächenfolie bzw. einem Kunstleder der Fall ist. Weiterhin weist die mehrschichtige Verbundstruktur 2 eine Funktionsschicht 4 und eine Sperrschicht 8 aus einem textilen Flächengebilde auf. Die Funktionsschicht 4 weist ein Substrat aus thermoplastischem Polyurethan (TPU) und eine darauf angeordnete elektrisch leitfähige Schicht auf. Die elektrisch leitfähige Schicht ist als eine gedruckte elektrisch leitfähige Struktur ausgebildet. Zwischen der Sperrschicht 8 und der Funktionsschicht 4 ist eine geschäumte Schicht 12 angeordnet. Das textile Flächengebilde der Sperrschicht 8 ist mit Hilfe einer zusätzlichen Haftvermittlerschicht auf den Polymerschaum 12 aufkaschiert. Die mehrschichtige Verbundstruktur 2 kann so das Oberflächenmaterial des Verkleidungsbauteils 1 bilden, das z.B. eine Türverkleidung in einem Fahrzeuginnenraum ist. Die auf dem Substrat in einem Druckverfahren als pastöse Masse applizierte und danach getrocknet ausgehärtete elektrisch leitfähige Schicht ist durch ihren inneren elektrischen Widerstand bei Stromfluss beheizbar, sodass die mehrschichtige Verbundstruktur 2 bzw. das Verkleidungsbauteil 1 als Flächenheizelement verwendbar ist.

Die mehrschichtige Verbundstruktur 2 ist auf einem Träger 10 aus polymerem Material angeordnet. Die Sperrschicht 8 und die geschäumte Schicht sind zur thermischen Isolation der Funktionsschicht 4 ausgebildet. Das polymere Material des Trägers 10 kann so in einem Spritzgussverfahren verarbeitet werden, ohne dass die Funktionsschicht 4 aufgrund eines direkten Kontakts mit dem aufgeschmolzenen und erhitzten polymeren Material des Trägers 10 überhitzt und beschädigt wird.

### Bezugszeichenliste (Teil der Beschreibung)

- 1: Verkleidungsteil
- 2: mehrschichtige Verbundstruktur
- 4: Funktionsschicht
- 6: Oberschicht
- 8: Sperrschicht
- 10: Träger
- 12: geschäumte Schicht

## Patentansprüche

1. Mehrschichtige Verbundstruktur (2), aufweisend eine einlagige oder mehrlagige Oberschicht (6), vorzugsweise aus polymerem Material und eine Funktionsschicht (4) mit einem Substrat und einer darauf angeordneten elektrisch leitfähigen Schicht, vorzugsweise als eine gedruckte elektrisch leitfähige Struktur, wobei die Oberschicht (6) die sichtbare Seite der mehrschichtigen Verbundstruktur (2) bildet,
**dadurch gekennzeichnet, dass**
die mehrschichtige Verbundstruktur (2) zur thermischen Isolation der Funktionsschicht (4) eine Sperrschicht (8) aus einem textilen Flächengebilde aufweist.

2. Mehrschichtige Verbundstruktur (2) nach Anspruch 1,
**dadurch gekennzeichnet, dass**
zwischen der Sperrschicht (8) und der Funktionsschicht (4) eine geschäumte Schicht (12) angeordnet ist.

3. Mehrschichtige Verbundstruktur (2) nach einem der vorhergehenden Ansprüche,
**dadurch gekennzeichnet, dass**
die elektrisch leitfähige Schicht elektrisch heizbar ist.

4. Mehrschichtige Verbundstruktur (2) nach einem der vorhergehenden Ansprüche,
**dadurch gekennzeichnet, dass**
die elektrisch leitfähige Schicht einen Sensor aufweist oder wenigstens einen Teil eines Sensors bildet.

5. Mehrschichtige Verbundstruktur (2) nach Anspruch 4,
**dadurch gekennzeichnet, dass**
der Sensor ein Temperatursensor ist.

6. Verkleidungsteil (1), vorzugsweise Verkleidungsteil (1) eines Fahrzeuginnenraums, mit einem Träger (10) aus polymerem Material und einer darauf angeordneten mehrschichtigen Verbundstruktur (2) nach einem der Ansprüche 1 bis 5.

7. Fahrzeug mit einem Verkleidungsteil (1) nach Anspruch 6.

8. Spritzgussverfahren zur Herstellung eines Verkleidungsteils (1) nach Anspruch 6, **gekennzeichnet durch** die folgenden Verfahrensschritte:
a) Herstellung der mehrschichtigen Verbundstruktur (2),
b) Einlegen der mehrschichtigen Verbundstruktur (2) in ein mindestens zweiteiliges Spritzgusswerkzeug,
c) Einspritzen einer Polymerschmelze in das Spritzgusswerkzeug auf der der Sperrschicht (8) zugewandten Seite,
d) Abkühlen und Erstarren der Polymerschmelze in dem Spritzgusswerkzeug und Entnehmen des Verkleidungsteils (1).
